# EUROPEAN PATENT APPLICATION

(11) **EP 3 306 468 A1**
(43) Date of publication of application: **11.04.2018**
(21) Application number: 17188441.4
(22) Date of filing: 29.08.2017
(51) Int. Cl.: G06F 9/38

(54) **A METHOD AND A PROCESSOR**

(30) Priority: 05.10.2016 US 201615285555
(71) Applicant: Centipede Semi Ltd., 42504 Netanya (IL)
(72) Inventor: FRIEDMANN, Jonathan, P.O. Box 5068 Even Yehuda (IL); MIZRAHI, Noam, Hod Hasharon (IL); MANDLER, Alberto, Zichron Yaakov (IL)
(74) Representative: Beck Greener

(57) **Abstract**

A method includes, in a processor having a pipeline, fetching instructions of program code at run-time, in an order that is different from an order-of-appearance of the instructions in the program code. The instructions are divided into segments having segment identifiers (IDs). An event, which warrants flushing of instructions starting from an instruction belonging to a segment, is detected. In response to the event, at least some of the instructions in the segment that are subsequent to the instruction, and at least some of the instructions in one or more subsequent segments that are subsequent to the segment, are flushed from the pipeline based on the segment IDs.

## Description

### FIELD OF THE INVENTION

The present invention relates to a method and a processor. In embodiments, the invention relates generally to processor design, and particularly to methods and systems for flushing of instructions.

### BACKGROUND OF THE INVENTION

Various techniques have been proposed for dynamically parallelizing software code at run-time. For example, Marcuellu et al., describe a processor microarchitecture that simultaneously executes multiple threads of control obtained from a single program by means of control speculation techniques that do not require compiler or user support, in "Speculative Multithreaded Processors," Proceedings of the 12^{th} International Conference on Supercomputing, 1998.

### SUMMARY OF THE INVENTION

An embodiment of the present invention that is described herein provides a method including, in a processor having a pipeline, fetching instructions of program code at run-time, in an order that is different from an order-of-appearance of the instructions in the program code. The instructions are divided into segments having segment identifiers (IDs). An event, which warrants flushing of instructions starting from an instruction belonging to a segment, is detected. In response to the event, at least some of the instructions in the segment that are subsequent to the instruction, and at least some of the instructions in one or more subsequent segments that are subsequent to the segment, are flushed from the pipeline based on the segment IDs.

In an embodiment, detecting the event includes detecting branch mis-prediction. In another embodiment, detecting the event includes detecting a branch instruction that was not predicted. In yet another embodiment, detecting the event includes detecting a load-before-store dependency violation.

In some embodiments, flushing the instructions includes flushing the instructions based on the segment IDs from a stage of the pipeline or from a buffer that buffers the instructions between stages of the pipeline. In an example embodiment, flushing the instructions includes checking the segment IDs by circuitry coupled to the stage or to the buffer, and deciding by the circuitry which of the instructions to flush. In another embodiment, flushing the instructions includes flushing only a partial subset of the instructions that are buffered in the buffer, based on the segment IDs.

In a disclosed embodiment, the pipeline includes multiple parallel hardware threads, and processing the segments of a single program includes distributing the segments among the multiple hardware threads. In an embodiment, the instruction is processed by a first hardware thread, and flushing the instructions includes flushing one or more instructions in at least one subsequent segment in a second hardware thread that is different from the first hardware thread.

In some embodiments, detecting the event includes detecting, in a same clock cycle, multiple separate events that warrant flushing of instructions in different hardware threads. In an example embodiment, flushing the instructions includes identifying, based on the segment IDs, an oldest among the instructions to be flushed due to the multiple events, and flushing the instructions starting from the oldest among the instructions to be flushed.

In an embodiment, flushing the instructions includes refraining from flushing a segment that is subsequent to the segment but is independent of the segment. In an embodiment, detecting the event includes detecting multiple separate events that warrant flushing of instructions and occur in multiple different segments, and flushing the instructions includes independently flushing the instructions warranted by the multiple events.

There is additionally provided, in accordance with an embodiment of the present invention, a processor including a pipeline and control circuitry. The control circuitry is configured to instruct the pipeline to fetch instructions of program code at run-time, in an order that is different from an order-of-appearance of the instructions in the program code, to divide the instructions into segments having segment identifiers (IDs), to detect an event that warrants flushing of instructions starting from an instruction belonging to a segment, and, in response to the event, to flush from the pipeline, based on the segment IDs, at least some of the instructions in the segment that are subsequent to the instruction, and at least some of the instructions in one or more subsequent segments that are subsequent to the segment.

The present invention will be more fully understood from the following detailed description of the embodiments thereof, taken together with the drawings in which:

### BRIEF DESCRIPTION OF THE DRAWINGS

Fig. 1 is a block diagram that schematically illustrates a processor, in accordance with an embodiment of the present invention;
Fig. 2 is a flow chart that schematically illustrates a method for flushing instructions in a processor, in accordance with an embodiment of the present invention; and
Fig. 3 is a diagram that schematically illustrates a process of flushing instructions based on SEGMENT_ID, in accordance with an embodiment of the present invention.

### DETAILED DESCRIPTION OF EMBODIMENTS

### OVERVIEW

Embodiments of the present invention provide improved techniques for flushing instructions in a parallelized processor. The embodiments described herein refer mainly to a multi-thread processor, but the disclosed techniques are applicable to single-thread processors, as well.

In some disclosed embodiments, a processor comprises a pipeline that comprises multiple parallel hardware threads, and control circuitry that controls the pipeline. The pipeline generally fetches and processes instructions out-of-order, i.e., in an order that differs from the sequential order of appearance of the instructions in the program code. In the present context, the term "order of appearance of the instructions in the program code" refers to the order in which the instructions are actually processed at run-time. This order usually does not proceed in sequential order of Program Counter (PC) values, e.g., due to branches.

Typically, the instructions being fetched at run-time are divided by the control circuitry into groups of instructions. The groups are referred to herein as "code segments" or simply "segments" for brevity. Each segment comprises a plurality of instructions that are fetched in sequential order. The control circuitry decides, at run-time, how to divide the program code into segments, when to invoke the next segment or segments, and also which hardware thread is to process each segment. These decisions are typically speculative, e.g., based on branch and/or trace prediction. Based on these decisions, the control circuitry invokes the appropriate segments and distributes them to the appropriate threads for processing.

Various events that occur during processing, e.g., branch mis-prediction, may warrant flushing instructions from the pipeline. In response to such an event occurring in a certain instruction belonging to a certain segment, the control circuitry should flush from the pipeline (i) at least some of the instructions that follow the instruction in question in the same segment, and (ii) at least some of the instructions in subsequent segments that depend on that segment.

When the pipeline operates in the manner described above, different hardware threads process different segments in parallel, possibly out-of-order, and a thread may process at the same time instructions belonging to different segments. As can be appreciated, flushing instructions from such a pipeline is highly complicated. For example, it is sometimes necessary to flush from a thread only instructions belonging to a specific segment, while retaining the instructions belonging to another segment.

In some embodiments, the control circuitry performs flushing by assigning each segment a segment identifier (SEGMENT_ID), associating each instruction in the pipeline with the SEGMENT_ID of the segment to which the instruction belongs, and flushing instructions from the pipeline selectively, based on SEGMENT_ID. In one example embodiment, each instruction being fetched is marked with its SEGMENT_ID, and flows through the pipeline along with this mark. In another example embodiment, the control circuitry inserts the SEGMENT_IDs in "beginning of segment" and/or "end of segment" markers that are inserted into the stream of instructions flowing through the pipeline.

In either implementation, any module of the pipeline is able to immediately determine the SEGMENT_IDs of the instructions it processes. This capability simplifies the flushing process significantly. Various techniques for flushing instructions based on SEGMENT_ID are described herein. Flushing may be performed at any desired stage of the pipeline, e.g., between the fetching and decoding stages, from the output of a decoding stage, between successive sub-stages of a fetching or decoding stage, or from a reorder buffer, to name just a few examples.

Additional techniques, e.g., techniques for handling multiple flushing events that occur in the same clock cycle, and recovery techniques that resume normal operation following a flush, are also described.

### SYSTEM DESCRIPTION

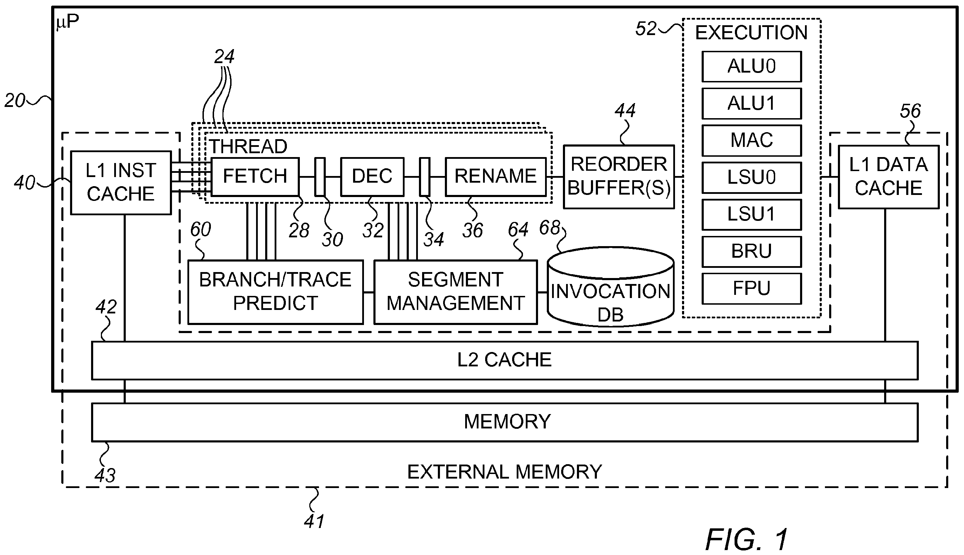

Fig. 1 is a block diagram that schematically illustrates a processor 20, in accordance with an embodiment of the present invention. In the present example, processor 20 comprises multiple hardware threads 24 that are configured to operate in parallel. Although the embodiments described herein refer mainly to a multi-thread processor, the disclosed techniques are applicable to single-thread processors, as well.

In the example of Fig. 1, each thread 24 is configured to process one or more respective segments of the code. Certain aspects of thread parallelization are addressed, for example, in U.S. Patent Applications 14/578,516, 14/578,518, 14/583,119, 14/637,418, 14/673,884, 14/673,889, 14/690,424, 14/794,835, 14/924,833, 14/960,385 and 15/196,071, which are all assigned to the assignee of the present patent application.

In some embodiments, each thread 24 comprises a fetching module 28, a decoding module 32 and a renaming module 36. Fetching modules 24 fetch the program instructions of their respective code segments from a memory, e.g., from a multi-level instruction cache. In the present example, processor 20 comprises a memory system 41 for storing instructions and data. Memory system 41 comprises a multi-level instruction cache comprising a Level-1 (L1) instruction cache 40 and a Level-2 (L2) cache 42 that cache instructions stored in a memory 43.

In a given thread 24, the fetched instructions are buffered in a First-In First-Out (FIFO) buffer 30, and provided from the output of buffer 30 to decoding module 32. In the present example buffer 30 buffers eight instructions. Alternatively, however, any other suitable buffer size can be used. Decoding modules 32 decode the fetched instructions.

In a given thread 24, the decoded instructions are buffered in a FIFO buffer 34, and provided from the output of buffer 34 to renaming module 36. In the present example buffer 34 buffers eight instructions/micro-ops. Alternatively, however, any other suitable buffer size can be used.

Renaming modules 36 carry out register renaming. The decoded instructions provided by decoding modules 32 are typically specified in terms of architectural registers of the processor's instruction set architecture. Processor 20 comprises a register file that comprises multiple physical registers. The renaming modules associate each architectural register in the decoded instructions to a respective physical register in the register file (typically allocates new physical registers for destination registers, and maps operands to existing physical registers).

The renamed instructions (e.g., the micro-ops/instructions output by renaming modules 36) are buffered in-order in one or more Reorder Buffers (ROB) 44, also referred to as Out-of-Order (OOO) buffers. In alternative embodiments, one or more instruction queue buffers are used instead of ROB. The buffered instructions are pending for out-of-order execution by multiple execution modules 52, i.e., not in the order in which they have been fetched. In alternative embodiments, the disclosed techniques can also be implemented in a processor that executes the instructions in-order.

The renamed instructions buffered in ROB 44 are scheduled for execution by the various execution units 52. Instruction parallelization is typically achieved by issuing one or multiple (possibly out of order) renamed instructions/micro-ops to the various execution units at the same time. In the present example, execution units 52 comprise two Arithmetic Logic Units (ALU) denoted ALU0 and ALU1, a Multiply-Accumulate (MAC) unit, two Load-Store Units (LSU) denoted LSU0 and LSU1, a Branch execution Unit (BRU) and a Floating-Point Unit (FPU). In alternative embodiments, execution units 52 may comprise any other suitable types of execution units, and/or any other suitable number of execution units of each type. The cascaded structure of threads 24 (including fetch modules 28, decoding modules 32 and renaming modules 36), ROB 44 and execution units 52 is referred to herein as the pipeline of processor 20.

The results produced by execution units 52 are saved in the register file, and/or stored in memory system 41. In some embodiments the memory system comprises a multi-level data cache that mediates between execution units 52 and memory 43. In the present example, the multi-level data cache comprises a Level-1 (L1) data cache 56 and L2 cache 42.

In some embodiments, the Load-Store Units (LSU) of processor 20 store data in memory system 41 when executing store instructions, and retrieve data from memory system 41 when executing load instructions. The data storage and/or retrieval operations may use the data cache (e.g., L1 cache 56 and L2 cache 42) for reducing memory access latency. In some embodiments, high-level cache (e.g., L2 cache) may be implemented, for example, as separate memory areas in the same physical memory, or simply share the same memory without fixed pre-allocation.

A branch/trace prediction module 60 predicts branches or flow-control traces (multiple branches in a single prediction), referred to herein as "traces" for brevity, that are expected to be traversed by the program code during execution by the various threads 24. Based on the predictions, branch/trace prediction module 60 instructs fetching modules 28 which new instructions are to be fetched from memory. As noted above, the instructions being fetched are divided by the control circuitry into groups of instructions referred to as segments, e.g., based on branch or trace prediction. Branch/trace prediction in this context may predict entire traces for segments or for portions of segments, or predict the outcome of individual branch instructions.

In some embodiments, processor 20 comprises a segment management module 64. Module 64 monitors the instructions that are being processed by the pipeline of processor 20, and constructs an invocation data structure, also referred to as an invocation database 68. Typically, segment management module 64 decides how to divide the stream of instructions being fetched into segments, e.g., when to terminate a current segment and start a new segment. In an example non-limiting embodiment, module 64 may identify a program loop or other repetitive region of the code, and define each repetition (e.g., each loop iteration) as a respective segment. Any other suitable form of partitioning into segments, not necessarily related to the repetitiveness of the code, can also be used.

Invocation database 68 divides the program code into traces, and specifies the relationships between them. Module 64 uses invocation database 68 for choosing segments of instructions to be processed, and instructing the pipeline to process them. Database 68 is typically stored in a suitable internal memory of the processor. The structure and usage of database 68 is described in detail in U.S. Patent application 15/196,071, cited above.

Since fetching modules 28 fetch instructions according to branch/trace predictions, and according to traversal of invocation database 68, instructions are generally fetched out-of-order, i.e., in an order that differs from the sequential order of appearance of the instructions in the code.

In some embodiments, segment management module 64 manages flushing of instructions that are processed by the processor pipeline. In some embodiments, some or even all of the functionality of module 64 may be distributed among threads 24. In the latter embodiments, threads 24 communicate with one another and perform flushing in a distributed manner. Example flushing techniques are described in detail below. In various embodiments, the techniques described herein may be carried out by segment management module 64, or it may be distributed between module 64, module 60 and/or other elements of the processor, e.g., hardware coupled to threads 24. In the context of the present patent application and in the claims, any and all processor elements that manage the flushing of instructions is referred to collectively as "control circuitry."

The configuration of processor 20 shown in Fig. 1 is an example configuration that is chosen purely for the sake of conceptual clarity. In alternative embodiments, any other suitable processor configuration can be used. For example, parallelization can be performed in any other suitable manner, or may be omitted altogether. The processor may be implemented without cache or with a different cache structure. The processor may comprise additional elements not shown in the figure. Further alternatively, the disclosed techniques can be carried out with processors having any other suitable micro-architecture. As another example, it is not mandatory that the processor perform register renaming.

Processor 20 can be implemented using any suitable hardware, such as using one or more Application-Specific Integrated Circuits (ASICs), Field-Programmable Gate Arrays (FPGAs) or other device types. Additionally or alternatively, certain elements of processor 20 can be implemented using software, or using a combination of hardware and software elements. The instruction and data cache memories can be implemented using any suitable type of memory, such as Random Access Memory (RAM).

Processor 20 may be programmed in software to carry out the functions described herein. The software may be downloaded to the processor in electronic form, over a network, for example, or it may, alternatively or additionally, be provided and/or stored on non-transitory tangible media, such as magnetic, optical, or electronic memory.

### SELECTIVE FLUSHING OF INSTRUCTIONS BASED ON SEGMENT_ID

In some embodiments, segment management module 64 decides at run-time how to divide the sequence of instructions of the program code into segments, when to invoke the next segment or segments, and also which hardware thread 24 is to process each segment. Based on these decisions, module 64 invokes the appropriate segments and distributes them to the appropriate threads 24 for processing. Threads 24 process their assigned segments of the program code.

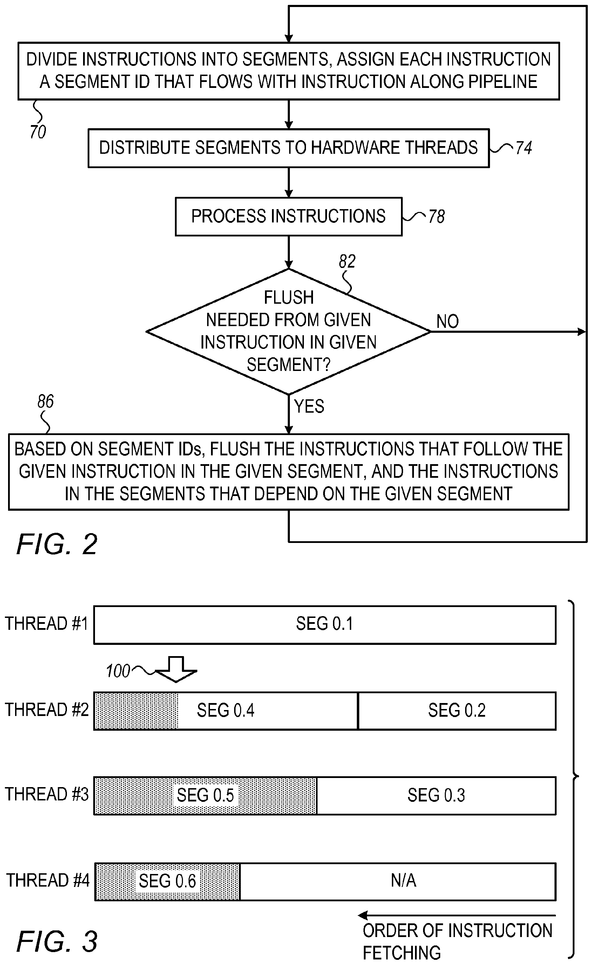

Generally, the segments are processed out-of-order, i.e., the order in which the segments are processed differs from the sequential order of the segments in the program code. An example of such out-of-order processing is demonstrated in Fig. 3 below.

In some embodiments, certain events that occur during processing of the code warrant flushing of instructions from the pipeline. For example, if module 60 mis-predicts the branch decision of a certain conditional branch instruction, then module 64 should typically flush at least some of the instructions that follow the mis-predicted branch instruction. In one embodiment module 64 flushes all the instructions that are subsequent to the mis-predicted branch instruction. Alternatively, however, module 64 may flush only some of the instructions that are subsequent to the mis-predicted branch instruction. In particular, module 64 need not necessarily start flushing from the instruction that immediately follows the mis-predicted branch instruction.

As another example, a "load-before-store" violation also warrants flushing. In this scenario, a load instruction, which belongs to a certain segment and reads from a register or memory address, depends on a store instruction, which belongs to an earlier segment and writes to that register or memory address. If the load instruction is executed speculatively before the store instruction, the loaded value is likely to be wrong. Thus, "load-before-store" violation warrants flushing of instructions. In various embodiments, module 64 may flush the instructions starting from the load instruction, or alternatively start flushing from another suitable instruction. Example possibilities are to start flushing from the store instruction, or from the nearest instruction that precedes the load instruction and is marked as a "checkpoint." A checkpoint is typically defined as an instruction for which the processor state is known and recorded, and therefore it is possible to roll-back the processing to it.

As yet another example, a "decoder flush" may occur when a decoding module 32 identifies a branch instruction that was not predicted by branch/trace prediction module 60. Such a scenario may occur, for example, at the first time the processor processes a branch instruction, or at the first time after the processor "forgotten" a branch. This event may warrant flushing of instructions in another thread and/or from future segments.

Additionally or alternatively, module 64 may detect any other suitable event that warrants flushing of instructions. In some embodiments, upon detecting an event that warrants flushing from a certain instruction belonging to a certain segment, module 64 flushes (i) at least some of the instructions that follow the instruction in question in the same segment, and (ii) at least some of the instructions in the subsequent segments, which depend on the segment in question. The instruction from which flushing should start is also referred to herein as a "first-flushed instruction." The segment to which the first-flushed instruction belongs is also referred to herein as a "first-flushed segment."

When segments are processed out-of-order by multiple parallel hardware threads 24, flushing instructions from a certain instruction onwards is a complicated task. For example, a thread 24 may process, at the same time, a segment that should be flushed and a segment that should not be flushed. Therefore, it may be necessary to flush from a thread only the subset of instructions belonging to a specific segment, while retaining the instructions belonging to another segment.

In some embodiments, module 64 performs flushing by assigning each segment a segment identifier (SEGMENT_ID), associating each instruction in the pipeline with the SEGMENT_ID of the segment to which the instruction belongs, and flushing instructions in the various threads 24 selectively, based on SEGMENT_ID.

Fig. 2 is a flow chart that schematically illustrates a method for flushing instructions in processor 20, in accordance with an embodiment of the present invention. At an ID assignment step 70, module 64 assigns each segment (group of instructions as defined above) of the program code a respective SEGMENT_ID. The SEGMENT_ID typically comprises a numerical value that increments according to the order of the segments in the program code. Alternatively, however, module 64 may use any other suitable SEGMENT_ID assignment scheme, which is indicative of the order of the segments in the code.

Module 64 associates each instruction being fetched with the SEGMENT_ID of the segment to which the instruction belongs. In one embodiment, fetch unit 28 marks each instruction being fetched with the appropriate SEGMENT_ID, e.g., by setting a predefined group of bits in the instruction word to a value that is indicative of the SEGMENT_ID. The marked instructions then flow through the pipeline along with their SEGMENT_ID marks. Any module along the pipeline is thus able to associate instructions with their segments by inspecting the marks.

In another embodiment, fetch module 28 does not mark every instruction, but rather inserts "beginning of segment" and/or "end of segment" markers into the stream of instructions flowing through the pipeline, between successive segments. Each "beginning of segment" and/or "end of segment" marker comprises the SEGMENT_ID (of the segment that is about to begin, or of the segment that has just ended). Any module along the pipeline is able to associate instructions with their segments by identifying the markers and tracking the SEGMENT_ID of the current segment. Further alternatively, any other technique can be used for associating each instruction with the segment to which it belongs.

At a distribution step 74, module 64 distributes the segments among threads 24 for parallel processing. (In embodiments that use a single-thread processor, this step is omitted.) At a processing step 78, the processor pipeline processes the instructions distributed to the threads.

At a flush detection step 82, module 64 checks whether flush is needed. Any of the events described above (e.g., branch mis-prediction or load-before-store violation), or any other suitable event, can be verified. If no flush is warranted, the method loops back to step 70 above.

Upon detecting an event that warrants flushing of instructions, starting from a certain instruction in a certain segment, module 64 performs flushing by SEGMENT_ID, at a flushing step 86. Typically, module 64 flushes from the pipeline (i) at least some of the instructions that follow the instruction in question in the same segment, and (ii) at least some of the instructions in the segments that are subsequent to that segment. Module 64 selects the instructions to be flushed in accordance with their associated SEGMENT_IDs.

In other words, if the first-flushed instruction belongs to segment N (SEGMENT_ID=N), then module 64 flushes at least some of the instructions that follow the first-flushed instruction in segment N (e.g., from the first-flushed instruction until the end of the segment). Module 64 also flushes at least some of the instructions (e.g., all the instructions) in the segments that are subsequent to segment N, i.e., segments N+1, N+2,... The instructions that precede the first-flushed instruction (i.e., all the instructions in the segments whose SEGMENT_ID<N, and the instruction in segment N that precede the first-flushed instruction) are typically not flushed. The method then loops back to step 70 above.

The instructions to be flushed may be processed by any of the hardware threads, possibly by all the threads.

Fig. 3 is a diagram that schematically illustrates a process of flushing instructions based on SEGMENT_ID, in accordance with an embodiment of the present invention. In the present example, the pipeline of processor 20 comprises four hardware threads 24 denoted THREAD#1, THREAD#2, THREAD#3 and THREAD#4. Segment management module 64 assigns successive segments SEGMENT_IDs denoted 0.1, 0.2, 0.3, 0.4,... and distributes the segments for parallelized processing by the four hardware threads.

At a certain point in time that is shown in Fig. 3, THREAD#1 is processing the instructions of segment 0.1. At the same time, THREAD#2 is processing the instructions of segment 0.2 followed by the instructions of segment 0.4. THREAD#3 is processing the instructions of segment 0.3 followed by the instructions of segment 0.5. THREAD#4 is processing the instructions of segment 0.6. The order in which the instructions were fetched is shown at the bottom of the figure.

As demonstrated in this example, the segments 0.1-0.6 are fetched out-of-order and at least partly in parallel. In addition, at a certain point in time a certain thread may be simultaneously processing instructions of multiple segments.

In the present example, module 64 detects a branch mis-prediction in some conditional branch instruction denoted 100, belonging to segment 0.4 that is processed by THREAD#2. The instruction following instruction 100 is thus the first-flushed instruction in this example, and segment 0.4 is the first-flushed segment.

In the present example, in response to detecting the branch mis-prediction, module 64 flushes all the instructions that follow instruction 100 in segment 0.4 (processed by THREAD#2), all the instructions in segment 0.5 (processed by THREAD#3), and all the instructions in segment 0.6 (processed by THREAD#4). The flushed instructions are marked with a shaded pattern in the figure.

As demonstrated by this example, in some of the threads (namely THREAD#2, THREAD#3 and THREAD#4) module 64 flushes only a partial subset of the instructions, and retains the other instructions. Since each instruction is associated with its SEGMENT_ID, module 64 is able to select which instructions to flush and which instructions to retain in the thread.

The example of Fig. 3 also demonstrates that, in some embodiments, module 64 flushes instructions processed by a certain thread 24, due to an event (e.g., branch mis-prediction) that occurs in a different thread 24.

### FLUSHING FROM ANY STAGE OF THE PIPELINE

In various embodiments, module 64 may begin flushing instructions at any suitable stage along threads 24 or along the pipeline in general. In the context of the present patent application and in the claims, the term "flushing an instruction from the pipeline" refers to any suitable technique that may be used for preventing the instruction from being fully processed by the pipeline. The description herein refers mainly to flushing that involves removing the entire instruction from the pipeline, but such removal is not mandatory. Flushing an instruction may alternatively be performed, for example, by setting or clearing one or more bits in the instruction word that render the instruction invalid, or by performing any other suitable action that causes the instruction to be halted, not executed, not fully committed, or otherwise not fully processed.

In some embodiments module 64 flushes instructions by removing them from buffer 30 (i.e., from the output of fetch module 28 or the input of decoding module 32, between the fetch and decoding stages). Additionally or alternatively, module 64 flushes instructions by removing them from buffer 34 (i.e., from the output of decoding module 32 or the input of renaming module 36, between the decoding and renaming stages). Further additionally or alternatively, module 64 flushes instructions by removing them from an internal buffer (not shown) that buffers instructions between successive sub-stages of fetch module 28.

Further additionally or alternatively, module 64 flushes instructions by removing them from reorder buffer 44. Further additionally or alternatively, module 64 flushes instructions by removing the corresponding Program Counter (PC) values from an output buffer of the Branch execution Unit (BRU). Further additionally or alternatively, module 64 may flush instructions based on SEGMENT_ID by removing instructions from a load buffer and/or store buffer used by the Load-Store Units (LSU) of the pipeline (see execution units 52 in Fig. 1). This flushing also uses the fact that the instructions buffered in the load and store buffers are associated with SEGMENT_IDs. Further additionally or alternatively, module 64 may flush instructions based on SEGMENT_ID by removing instructions from any other suitable buffer in the pipeline of processor 20. In all the above examples, module 64 may flush only a partial subset of the instructions that are buffered in a buffer of the pipeline, depending on the SEGMENT_IDs of the instructions.

When beginning to flush instruction at a certain stage, flushing continues backwards in the pipeline. In this context, "backwards" means toward less advanced stages of the pipeline. Consider, for example, THREAD#3 in Fig, 3. In an example embodiment, module 64 identifies the pipeline stage in which the boundary between segment 0.3 and segment 0.5 currently lies. Module 64 then flushes the instructions from this stage backwards, so as to flush the instructions of segment 0.5 but retain the instructions of segment 0.3. For example, if the boundary between segments 0,3 and 0.5 is currently in buffer 34 of THREAD#3, module 64 starts flushing at the appropriate location in buffer 34, and continues backwards to flush the instructions in decode module 32, buffer 30 and fetch module 28 of THREAD#3.

In some embodiments, any pipeline stage (e.g., fetch module 28, decoding module 32, renaming module 36, and/or any of execution modules 52) may comprise local circuitry that checks the segment IDs of the instructions flowing through that stage and decides, based on the segment IDs, which of the instructions to flush. Similarly, any of the buffers of the pipeline (e.g., buffer 30, 34 and/or 44) may comprise local circuitry that checks the segment IDs of the instructions buffered in that buffer and decides, based on the segment IDs, which of the instructions to flush. Such local circuitry may be coupled to each of the pipeline stages and buffers, to a subset of the stages and buffers, or even only to a single stage or buffer.

### HANDLING MULTIPLE FLUSH EVENTS IN THE SAME INSTRUCTION CYCLE

In some cases, multiple separate events that warrant flushing may occur simultaneously, e.g., in the same instruction cycle. The description that follows refers to two simultaneous events, for the sake of clarity, but the disclosed techniques can be applied in a similar manner to a larger number of events. The events occur in different segments, possibly in different threads 24.

In some embodiments, module 64 identifies the two events, identifies the two corresponding first-flushed instructions, and the SEGMENT_IDs associated with these first-flushed instructions. Module 64 then initiates the above-described flushing process based on the oldest among the first-flushed instructions, and the associated SEGMENT_ID (the oldest among the first-flushed segments).

The above process can be implemented in various ways. In one embodiment, each thread 24 in which a flushing event occurs independently flushes the instructions that are younger than the respective first-flushed instruction. In addition, each of the two threads reports the flushing event to the other thread. Upon receiving an indication of flushing from a peer thread, the receiving thread decides whether its own first-flushed segment is older or younger than the first-flushed segment of the peer thread. If its own first-flushed segment is older, the thread proceeds with the flushing process (of the first-flushed segment and all subsequent dependent segments, possibly in other threads). If its own first-flushed segment is younger than that of the peer thread, the thread stops flushing (since the peer thread will flush the appropriate instructions for both flushing events).

In an alternative embodiment, each thread 24 in which a flushing event occurs independently flushes the instructions that are younger than the respective first-flushed instruction. In addition, each of the two threads reports the flushing event to module 64. Module 64 identifies the oldest among the first-flushed instructions (and thus the oldest among the first-flushed segments). Module 64 instructs the thread that processes the oldest first-flushed segment, and any other suitable thread(s), to flush the appropriate instructions.

Further alternatively, flushing due to multiple flushing events may be coordinated among threads in any other suitable manner.

### ADDITIONAL EMBODIMENTS AND VARIATIONS

Following a flush process, segment management module 64 may resume numbering of the segments in any suitable way. In one embodiment, after a segment having SEGMENT_ID=N is partially flushed (from the first-flushed instruction) and segments having SEGMENT_ID>N are fully flushed, the next segment of the code will be again assigned SEGMENT_ID=N.

In some embodiments, after a segment having SEGMENT_ID=N is partially flushed (from the first-flushed instruction), fetching subsequent instructions for this segment is performed by a different thread than the thread originally processing this segment.

In some embodiments, threads 24 process, at the same time, two or more segment groups that are totally independent of one another. For example, threads 24 may process, at the same time, two regions of the code that are distant from one another and have no mutual dependencies. In these embodiments, even though one segment group is younger (later) than the other, there is no reason to flush the younger group in response to a flushing event in the older (earlier) group. Thus, in some embodiments module 64 refrains from flushing a group of segments that is totally independent of the first-flushing segment. As noted earlier, module 64 may perform a coordinated flush process in response to multiple flushing events that occur simultaneously. When two (or more) segments groups that are totally independent of one another are processed at the same point in time, the processor may perform such a coordinated process separately within each segment group and independently of any other group.

It will thus be appreciated that the embodiments described above are cited by way of example, and that the present invention is not limited to what has been particularly shown and described hereinabove. Rather, the scope of the present invention includes both combinations and sub-combinations of the various features described hereinabove, as well as variations and modifications thereof which would occur to persons skilled in the art upon reading the foregoing description and which are not disclosed in the prior art.

## Claims

1. A method, comprising:
in a processor having a pipeline, fetching instructions of program code at run-time, in an order that is different from an order-of-appearance of the instructions in the program code;
dividing the instructions into segments having segment identifiers (IDs);
detecting an event that warrants flushing of instructions starting from an instruction belonging to a segment; and
in response to the event, flushing from the pipeline, based on the segment IDs, at least some of the instructions in the segment that are subsequent to the instruction, and at least some of the instructions in one or more subsequent segments that are subsequent to the segment.

2. The method according to claim 1, wherein detecting the event comprises detecting branch mis-prediction.

3. The method according to claim 1, wherein detecting the event comprises detecting a branch instruction that was not predicted.

4. The method according to claim 1, wherein detecting the event comprises detecting a load-before-store dependency violation.

5. The method according to any of claims 1 to 4, wherein flushing the instructions comprises flushing the instructions, based on the segment IDs, from a stage of the pipeline or from a buffer that buffers the instructions between stages of the pipeline.

6. The method according to claim 5, wherein flushing the instructions comprises checking the segment IDs by circuitry coupled to the stage or to the buffer, and deciding by the circuitry which of the instructions to flush.

7. The method according to claim 5, wherein flushing the instructions comprises flushing only a partial subset of the instructions that are buffered in the buffer, based on the segment IDs.

8. The method according to any of claims 1 to 4, wherein the pipeline comprises multiple parallel hardware threads, and wherein processing the segments of a single program comprises distributing the segments among the multiple hardware threads.

9. The method according to any of claims 1 to 4, wherein the instruction is processed by a first hardware thread, and wherein flushing the instructions comprises flushing one or more instructions in at least one subsequent segment in a second hardware thread that is different from the first hardware thread.

10. The method according to any of claims 1 to 4, wherein detecting the event comprises detecting, in a same clock cycle, multiple separate events that warrant flushing of instructions in different hardware threads.

11. The method according to claim 10, wherein flushing the instructions comprises identifying, based on the segment IDs, an oldest among the instructions to be flushed due to the multiple events, and flushing the instructions starting from the oldest among the instructions to be flushed.

12. The method according to any of claims 1 to 4, wherein flushing the instructions comprises refraining from flushing a segment that is subsequent to the segment but is independent of the segment.

13. The method according to any of claims 1 to 4, wherein detecting the event comprises detecting multiple separate events that warrant flushing of instructions and occur in multiple different segments, and wherein flushing the instructions comprises independently flushing the instructions warranted by the multiple events.

14. A processor, comprising:
a pipeline; and
control circuitry, which is configured to:
instruct the pipeline to fetch instructions of program code at run-time, in an order that is different from an order-of-appearance of the instructions in the program code;
divide the instructions into segments having segment identifiers (IDs);
detect an event that warrants flushing of instructions starting from an instruction belonging to a segment; and
in response to the event, flush from the pipeline, based on the segment IDs, at least some of the instructions in the segment that are subsequent to the instruction, and at least some of the instructions in one or more subsequent segments that are subsequent to the segment.

15. The processor according to claim 14, wherein flushing the instructions comprises flushing the instructions, based on the segment IDs, from a stage of the pipeline or from a buffer that buffers the instructions between stages of the pipeline.
